# EUROPÄISCHE PATENTANMELDUNG

(11) **EP 2 119 805 A1**
(43) Veröffentlichungstag der Anmeldung: **18.11.2009**
(21) Anmeldenummer: 08009023.6
(22) Anmeldetag: 15.05.2008
(51) Int. Cl.: C23C 4/18

(54) **Verfahren zur Herstellung einer optimierten Haftvermittlerschicht durch teilweise Verdampfung der Haftvermittlerschicht**

(71) Anmelder: SIEMENS AKTIENGESELLSCHAFT, 80333 München (DE)
(72) Erfinder: Halberstadt, Knut, 45481 Mühlheim an der Ruhr (DE); Schmitz, Friedhelm, 46537 Dinslaken (DE); Schuhmann, Eckhart, Dr., 45468 Mühlheim an der Ruhr (DE); Stamm, Werner, Dr., 45481 Mühlheim an der Ruhr (DE)

(57) **Zusammenfassung**

Haftmittelschichten werden oft in Wärmedämmschichten verwendet, um die Anbindung einer äußeren keramischen Schicht zu einem metallischen Substrat zu verbessern.

Das System lässt sich dadurch optimieren, dass eine verbesserte Haftvermittlerschicht erzeugt wird, die zu einem homogeneren Oxidwachstum führt.

## Beschreibung

Die Erfindung betrifft ein Verfahren zur Herstellung einer Haftvermittlerschicht und ein Schichtsystem gemäß dem Oberbegriff des Anspruchs 12.

In Wärmedämmschichtsystemen wird oft eine metallische Haftvermittlerschicht verwendet, um die Anbindung der äußeren keramischen Wärmedämmschicht zum metallischen Substrat zu verbessern.

Als Haftmittelschichten werden oft einlagige MCrAlX-Schichten oder sogar neuerdings zweilagig aufgeraute MCrAlX-Schichten eingesetzt.
Dabei weist die äußere MCrAlX-Schicht eine andere Struktur auf, die insbesondere zur Verbesserung der Oxidations- und Korrosionsschutzwirkung beiträgt.
Diese zweite MCrAlX-Schicht wird separat aufgebracht, was einen zusätzlichen Verfahrensschritt darstellt und auch Anbindungsprobleme mit sich bringt. Die gewünschte Phase der äußeren lässt sich nicht immer genau kontrollieren.

Es ist daher Aufgabe der Erfindung o. g. Problem zu lösen.

Die Aufgabe wird gelöst durch ein Verfahren gemäß Anspruch 1, bei dem nur eine einlagige Schicht aufgebracht wird, aber durch eine Wärmebehandlung in eine zweilagige Schicht umgewandelt wird und ein Schichtsystem nach Anspruch 12.

In den Unteransprüchen sind jeweils weitere vorteilhafte Maßnahmen aufgelistet, die beliebig miteinander kombiniert werden können, um weitere Vorteile zu erzielen.

### Es zeigen:

- Figur 1: schematisch den Ablauf des Verfahrens,
- Figur 2, 3: Anwendungsbeispiele des so hergestellten Schichtsystems,
- Figur 4: eine Gasturbine
- Figur 5: perspektivisch eine Turbinenschaufel
- Figur 6: perspektivisch eine Brennkammer und
- Figur 7: eine Liste von Superlegierungen.

Die Figuren und die Beschreibung stellen nur Ausführungsbeispiele dar.

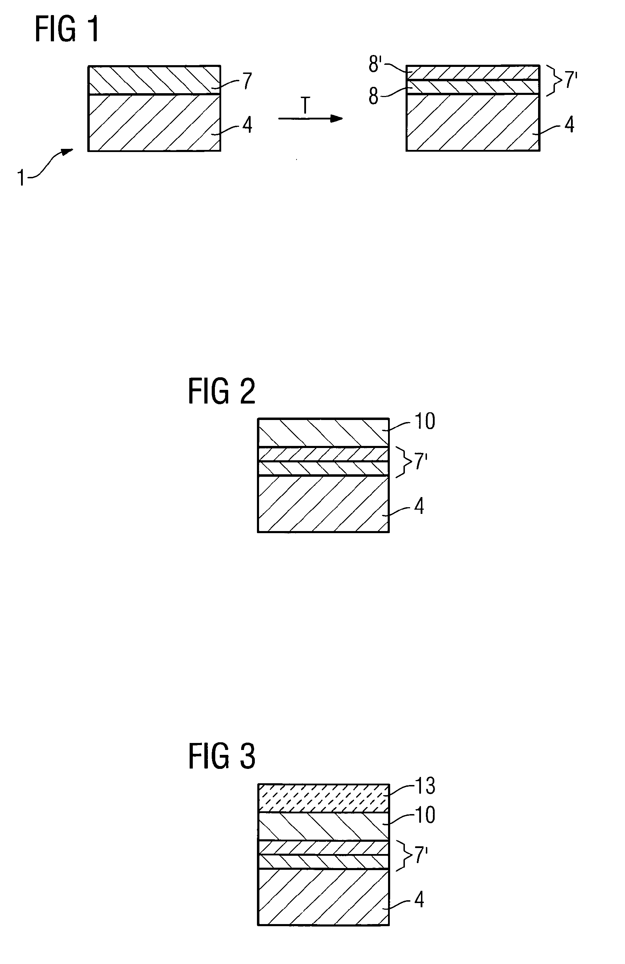

In Figur 1 ist schematisch der Ablauf des Verfahrens dargestellt. Das Schichtsystem 1 weist ein Substrat 4 und eine metallische Schicht 7 aus einer MCrAlX oder MCrAl-Legierung auf (M = Ni und/oder Co).

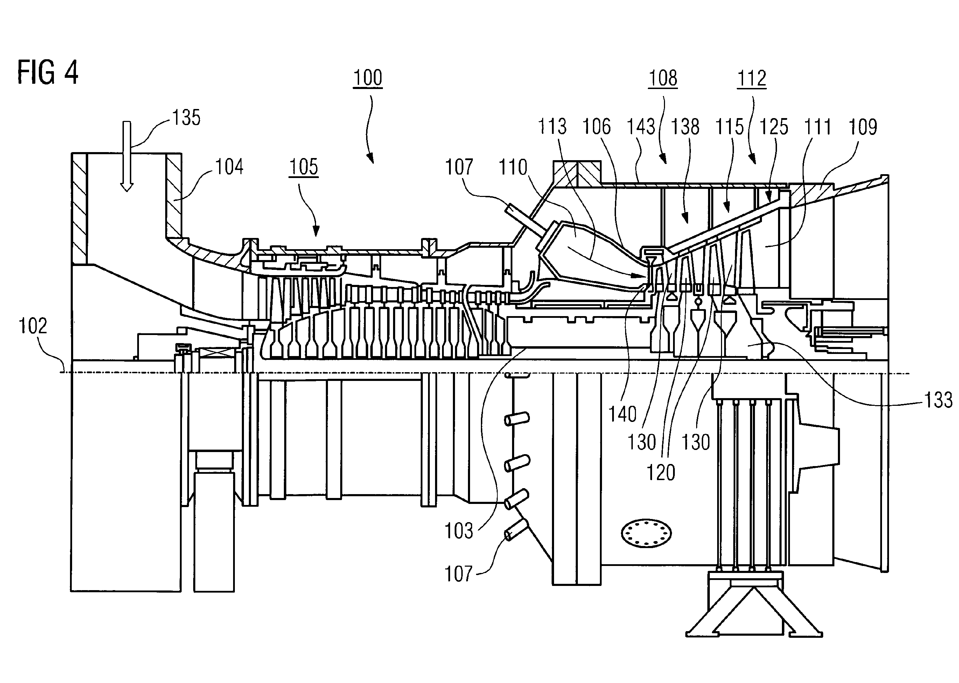

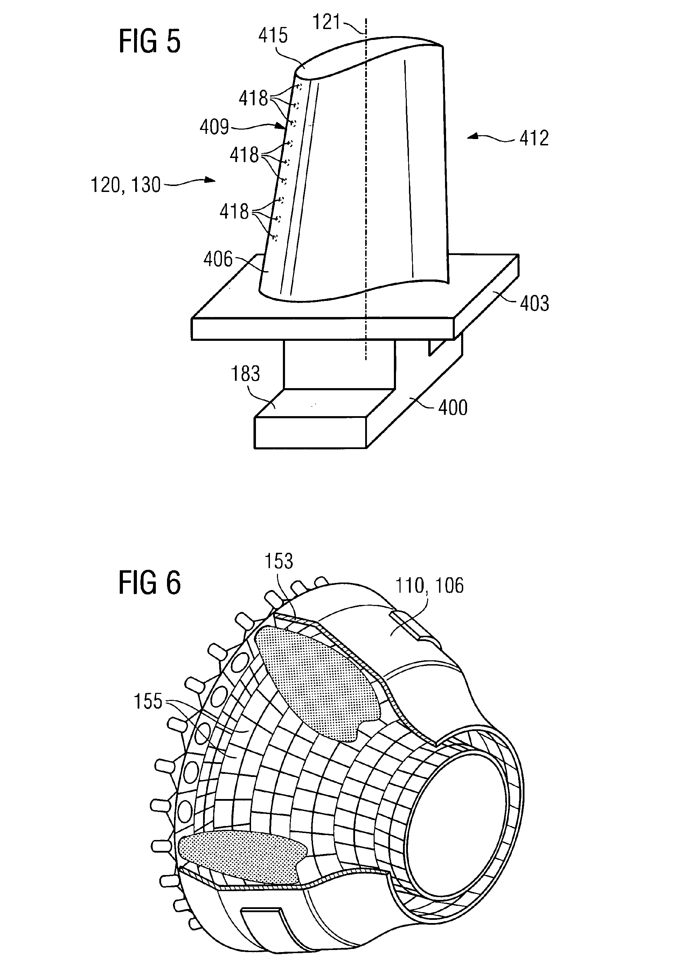

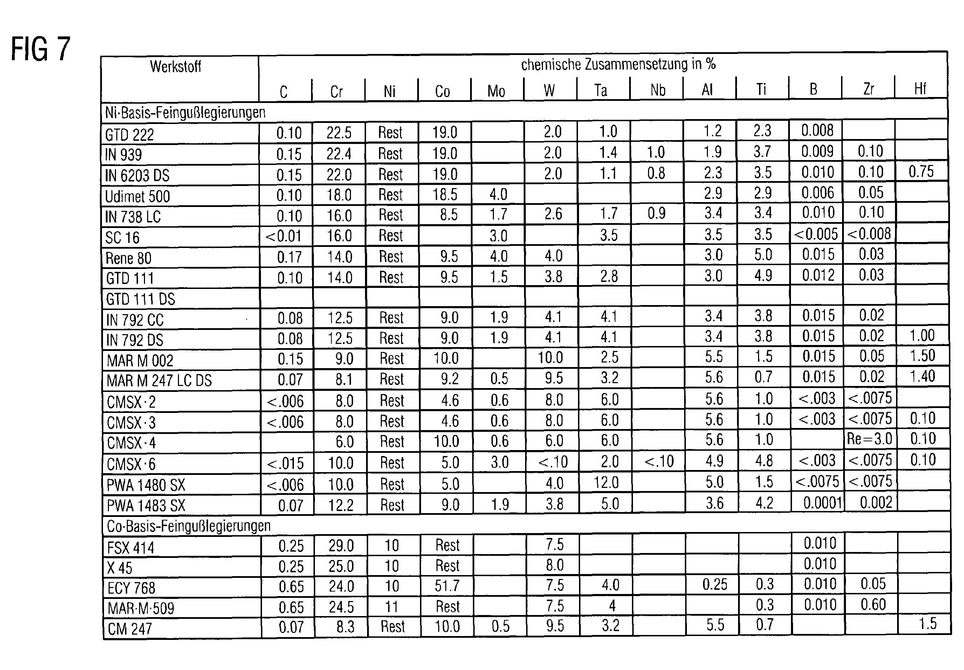

Das Substrat 4 besteht insbesondere beim Bauteil 120, 130, 155 (Fig. 5, 6) einer Gasturbine 100 (Figur 4) aus einer Superlegierung gemäß Figur 7.

Auf der nickel- oder kobaltbasierten Superlegierung ist eine MCrAl- oder MCrAlX-Schicht 7 vorhanden, die durch APS, LPPS, VPS, HVOF oder andere Beschichtungsverfahren aufgebracht wurde.
X ist vorzugsweise Yttrium (X= Y) und vorzugsweise ist M = Ni und Co.

Erfindungsgemäß findet nur ein Beschichtungsvorgang der Schicht 7 mit nur einer Pulversorte statt.

Durch eine Temperaturbehandlung (T) bei 1000°C - 1200°C, vorzugsweise 1140°C - 1180°C, vorzugsweise in einem Vakuum verdampft das Chrom der MCrAl- oder MCrAlX-Legierung, so dass im äußersten Schichtbereich 8' eine andere chemische Zusammensetzung (verringerter Chromgehalt), gegeben ist.

Die Dauer der Wärmebehandlung beträgt zwei bis acht Stunden Vorzugsweise bildet sich auch eine andere Phase auf, ganz vorzugsweise bildet sich eine β-NiAl-Schicht bildet aus. Dementsprechend lang wird die Wärmebehandlung vorzugsweise durchgeführt.
Gegebenenfalls wird eine zweite, von der Chromverdampfung unterscheidbare Wärmebehandlung durchgeführt, um die Phasentransformatoren von Ni-Al, Ni-Al-Cr, Ni-Al-Co, Ni-Al-Cr-Co in β-NiAl durchzuführen.

Die so veränderte Schicht 7' besteht also aus einen äußeren Schichtbereich 8' mit vermindertem Chromanteil, vorzugsweise aus einer β-NiAl-Phase und einen unveränderten unteren Schichtbereich 8, der dieselbe Zusammensetzung hat, wie die ursprünglich aufgebrachte Schicht 7, die aber dünner ausgebildet ist (Dicke von 8' Dicke von 7' bzw. Dicke (8 + 8') = Dicke (7) bzw. Dicke (8 + 8') = Dicke (7').

Diese Wärmebehandlung hat zwei Vorteile.
Einerseits bildet sich an der Oberfläche eine homogene einphasige Struktur aus. Andererseits bildet sich bei hohen Temperaturen eine homogene Oxidschicht mit sehr niedrigen Spindelanteilen und sehr geringen Anteilen von Nickel- und/oder Chromoxiden aus. Die so gebildete Oxidschicht ist der Ausgangspunkt für eine weitere homogene thermisch gewachsene Oxidschicht 10 (TGO) (Fig 2, 3). Für den Einsatz als Schichtsystem 1 kann eine bewusste Oxidation herbeigeführt werden oder die Oxidschicht 10 bildet sich beim Aufbringen einer keramischen äußeren Wärmedämmschicht 13 (Figur 3).

Ebenso kann die Schicht 7' als Overlay-Schicht verwendet werden, d.h., sie bildet die äußerste Schicht abgesehen von der sich darauf bildenden TGO-Schicht 10.

Der Schichtbereich 8' ist also nicht durch einen zweiten Beschichtungsvorgang aufgebracht worden oder nicht durch den Wechsel des Pulvers (von MCrAl zu NiAl-Pulver) beim Beschichtungsvorgang und weist somit auch eine gute Anbindung an den untenliegenden Schichtbereich 8 auf.

Die Figur 4 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 6 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Verfahren zur Herstellung eines Schichtsystems (1), bei dem auf ein Substrat (4) eine Schicht (7) aus einer MCrAIX- oder MCrAl-Legierung wird, wobei M = Ni oder Co ist,
wobei durch eine Wärmebehandlung Chrom aus der MCrAIX- oder MCrAl-Legierung der Schicht 7 verdampft, so dass ein äußerer Schichtbereich (8') innerhalb der Schicht (7) entsteht, der (8') gegenüber dem unteren Schichtbereich (8) der Schicht (7) einen verringerten Chromgehalt aufweist.

2. Verfahren nach Anspruch 1, bei der eine MCrAlX-Legierung für die Schicht (7) verwendet wird,
wobei X vorzugsweise Yttrium (Y) ist.

3. Verfahren nach Anspruch 1 oder 2,
bei dem die Temperatur 1000°C bis 1200°C, insbesondere 1140°C bis 1180°C,
ganz insbesondere 1160°C beträgt.

4. Verfahren nach Anspruch 1 oder 2, bei dem der äußere Schichtbereich (8') eine andere Phase aufweist als der untere Schichtbereich (8).

5. Verfahren nach Anspruch 1, 2 oder 4, bei dem eine Oxidschicht (10) auf dem Schichtbereich (8') der MCrAlX-Schicht (7') oder der MCrAl-Schicht (7') gebildet wird.

6. Verfahren nach Anspruch 5, bei dem eine keramische Schicht (13) auf die Oxidschicht (10) der MCrAl-Schicht (7') oder der MCrAlX-Schicht (7') aufgebracht wird.

7. Verfahren nach Anspruch 1 oder 3, bei dem eine Vakuumwärmebehandlung durchgeführt wird.

8. Verfahren nach Anspruch 1, 2, 3, 4, 5, 6 oder 7, bei der die Behandlung durchgeführt wird bis eine β-NiAl-Phase in dem äußeren Schichtbereich (8') entstanden ist.

9. Verfahren nach Anspruch 1, 2, 3, 4, 5, 6, 7 oder 8, bei dem durch eine zweite, verschiedene Wärmebehandlung der äußere Schichtbereich (8') in β-NiAl umgewandelt wird.

10. Verfahren nach Anspruch 1 oder 3, bei dem die Dauer des Verfahrens 2h bis 8h beträgt.

11. Verfahren nach Anspruch 1, 3, 4, 5, 6, 7, 8, 9 oder 10, bei dem eine MCrAl-Legierung für die Schicht (7) verwendet wird.

12. Schichtsystem, insbesondere hergestellt nach einem oder mehreren der Ansprüche 1 bis 11,
die aufweist:
ein Substrat (4),
mit einer Schicht (7),
die durch ein erstes Beschichtungsverfahren aufgebracht wurde,
ein unterer Schichtbereich (8) aus einer MCrAlX-Legierung oder einer MCrAl-Legierung
ein äußerer Schichtbereich (8') aus einer MCrAlX-Legierung oder einer MCrAl-Legierung aufweisend eine andere chemische Zusammensetzung als der untere Schichtbereich (8),
**dadurch gekennzeichnet, dass**
der Schichtbereich (8') nicht in einem zweiten Beschichtungsverfahren aufgebracht wurde.

13. Schichtsystem nach Anspruch 12,
**dadurch gekennzeichnet, dass**
der Schichtbereich (8') integral mit dem unteren Schichtbereich (8) verbunden ist.

14. Schichtsystem nach Anspruch 12,
**dadurch gekennzeichnet, dass**
der äußere Schichtbereich (8') eine andere Phase aufweist als der untere Schichtbereich (8).

15. Schichtsystem nach Anspruch 12, 13 oder 14,
**dadurch gekennzeichnet, dass**
der äußere Schichtbereich (8') eine β-NiAl-Phase aufweist, insbesondere daraus besteht.
